**Europäisches Patentamt**

**European Patent Office**

**Office européen des brevets**

(19)

(11) Publication number : **0 482 813 A1**

# (12) EUROPEAN PATENT APPLICATION

(21) Application number : **91309471.0**

(22) Date of filing : **15.10.91**

(51) Int. Cl.⁵ : **H04L 12/42, G06F 15/16**

(30) Priority : **24.10.90 US 602524**

(43) Date of publication of application :
**29.04.92 Bulletin 92/18**

(84) Designated Contracting States :
**DE ES FR GB IT**

(71) Applicant : **AMERICAN TELEPHONE AND TELEGRAPH COMPANY**
**550 Madison Avenue**
**New York, NY 10022 (US)**

(72) Inventor : **Babcock, John Daniel Sterling**
**1347 California Drive**
**Rolla, Missouri 65401 (US)**
Inventor : **Kellogg, Raymond Vincent**
**2428 Big Horn Canyon Road**
**Yukon, Oklahoma 73099 (US)**

(74) Representative : **Watts, Christopher Malcolm Kelway et al**
**AT&T (UK) LTD. AT&T Intellectual Property Division 5 Mornington Road**
**Woodford Green Essex IG8 OTU (GB)**

(54) **Data communication network and method of operation.**

(57) A data communication network having node arrays (0,1,2,3,4) with each node array having nodes (01-43) coupled with data systems (010-421) served by the network. Each array node is interconnected by secondary transmission paths to (012,023,031-412,423,431) each other array node for exchanging data between array nodes. In addition, each array node is interconnected by primary transmission paths (0111.0212,0313-4101,4202,4303) with a corresponding array node of adjacent node arrays for use in establishing ring transmission paths between node arrays with each ring transmission path interconnecting corresponding array nodes. Control apparatus selectively interconnect primary transmission paths and secondary transmission paths in a precedence order to establish network communication paths between the data systems.

FIG. 1

EP 0 482 813 A1

## Technical Field

The invention relates to data communication networks having nodes interconnected by ring transmission paths.

## Background and Problem

Data systems use a local area network to exchange data. Typically, a local area network has a node connected by communication paths with data systems wherein the node serves to interconnect the data systems together so that an originating data system may request the node to establish a connection with a destination data system for the exchange of data. A local area network may be used in a purchasing department to interconnect order terminals, computers, and data bases. Another local area network may be used to enable engineers to use computer terminals to design product and yet other local area networks may be installed for use by manufacturing, accounting, and payroll departments.

A problem arises in that local area networks are generally independent of other local area networks. However, in computer integrated manufacturing operations, it becomes necessary to interconnect local area networks into a data communication network that serves all of the design and manufacturing departments of a manufacturing operation.

In the past, nodes have been interconnected by ring transmission paths to form a data communication network. Generally, these ring networks have a pair of ring transmission paths wherein one ring transmits data in a clockwise direction around the network and the other ring transmission path transmits data in a counter clockwise direction. A problem arises in these data communication networks in that they are limited as to the amount of data that they can handle. In addition, these types of ring networks are usually packet networks wherein small packets are exchanged at various times between data systems and are not intended to provide a continuous path connection between the data systems during the exchange of data.

## Solution

The foregoing problems are solved by a torus configured data communication network for selectively interconnecting data systems wherein the network has a plurality of node arrays with each node array having a predetermined number of array nodes each coupled with ones of the data systems. Each array node is interconnected by secondary transmission paths for exchanging data with other nodes of the array and each array node is interconnected by primary transmission paths with a corresponding array node of an adjacent node array for establishing ring transmission paths between node arrays with each ring transmission path interconnecting corresponding array nodes. The network array node apparatus selectively interconnects ones of the primary transmission paths and ones of the primary transmission paths with ones of the secondary transmission paths and secondary transmission paths with secondary transmission paths in a precedence order to establish a network communication path between one array node interconnected with an originating data system and another array node interconnected with a destination data system thereby enabling exchange of data between originating and destination data systems on the established network communication path.

In an exemplary embodiment of the invention, a network array node has interface units for coupling ones of the primary and secondary transmission paths and data systems with the array node. A switch having switch paths coupled with ones of the interface units selectively interconnects the interface units and programmable control apparatus is coupled with the interface units and the switch. The programmable control apparatus responds to path connection requests appearing on ones of the primary and secondary transmission paths and generated by originating data systems by controlling the array node interface units and switch to establish node transmission paths via switch paths between ones of the primary and secondary transmission paths and data systems. The array nodes establish a network communication path in a precedence order between one array node interconnected with an originating data system and another array node interconnected with a destination data system thereby enabling exchange of data between the originating and destination data systems on the established network communication path.

## Brief Description of the Drawing

FIG. 1 illustrates a torus configured network having ring transmission paths interconnecting arrays of interconnected network nodes each coupled with data systems served by the network in accordance with the invention,

FIG. 2 is a block diagram of apparatus comprising each of the network array nodes set forth in FIG. 1,

FIGS. 3 through 8 sets forth an illustrative section of data bases recorded in memory of ones of array node central processor units set forth in FIG. 2, and

FIGS. 9 and 10 illustrate a how chart of the operation of each of the array nodes set forth in FIG. 1 in accordance with the invention.

## Detailed Description

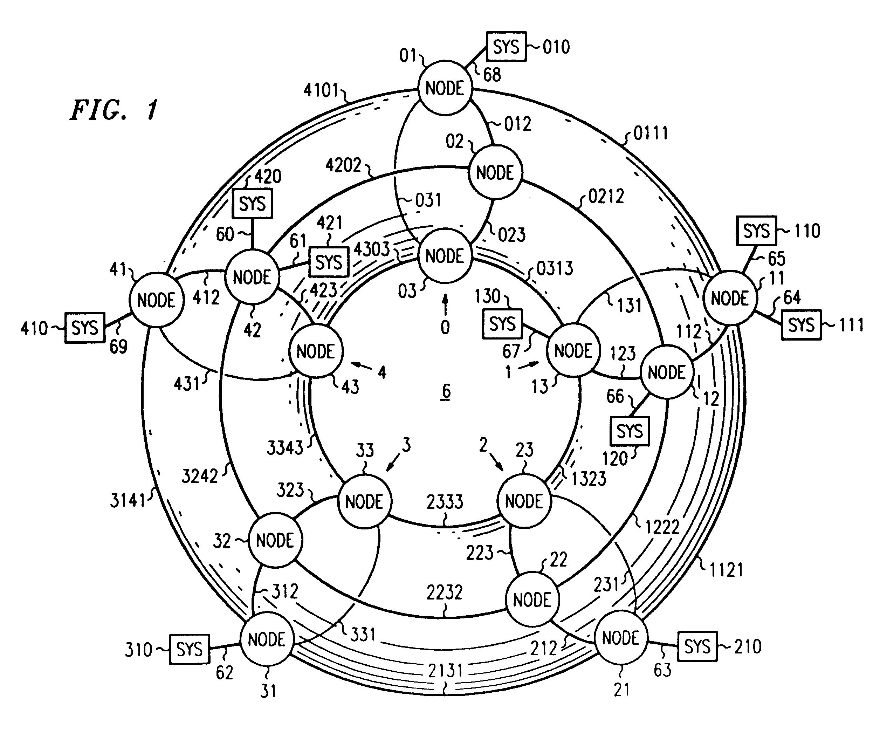

In the invention, FIG. 1, data communication network 6 is arranged to selectively interconnect data systems 010, 110, 111, 120, 130, 210, 310, 410, 420, and 421. A data system may be a main frame, mid-size or small computer, a personnel computer, a data base system, terminals arranged to access computers or data base systems interconnected by network 6. The operation of such data systems are well-known and need not be described in detail.

Network 6 has a plurality of node arrays desirated 0 through 4. It is to be understood that network 6 is not limited to five node arrays but may have more or less node arrays depending upon the number of data systems and the quantity of data required to be served and handled by network 6. Each node array 0 through 4 is identical and each has a predetermined number of nodes coupled with data systems served by network 6. In the invention, node array 1 comprises three array nodes 11, 12, and 13 with node 11 connected by communication paths 64 and 65 with data systems 111 and 110, respectively. Array node 12 is connected by communication path 66 with data system 120 and array node 13 is connected by communication path 67 with data system 130. Similarly, node array 4 comprises three nodes 41, 42, and 43 wherein array node 42 is connected by communication paths 60 and 61 with data systems 420 and 421 and array node 41 is connected with data system 410 by communication path 69.

Each array node is interconnected to other array nodes by secondary transmission paths used for exchanging data with other nodes of the array. For example, node 11 of node array 1 is connected by secondary transmission paths 112 and 131 with array nodes 12 and 13, respectively. Array node 12 is connected to array nodes 11 and 13 by second paths 112 and 123 and array node 13 is connected by secondary paths 131 and 123 with array nodes 11 and 12. In addition, each array node is interconnected by primary transmission paths with a corresponding array node of adjacent node arrays such that ring transmission paths may be established between node arrays with each ring transmission path interconnecting corresponding array nodes. Thus, array node 11 is interconnected by primary transmission paths 1121 and 0111 with corresponding array nodes 21 and 01, respectively, of adjacent node arrays 2 and 0. Primary transmission paths 1121, 2131, 3141, 4101, and 0111, or ones thereof, may be interconnected to form ring transmission paths that are established between array nodes 01, 11, 21, 31, and 41. In the invention, each primary and secondary transmission path may have multiple data transmission paths between array nodes with each transmission path capable of establishing connections and transmitting data in either direction.

Each array node, such as array node 11, may selectively interconnect ones of the primary transmission paths 0111, 1121, and ones of the primary transmission paths 0111, 1121 with ones of the secondary transmission paths 112, 131 in a precedence order to establish a network communication path between network nodes. Thus, a network communication path may be established from data originating system 120 over communication path 66, through array node 12, over primary transmission path 1222 to array node 22 and secondary transmission path 212 through array node 21 and communication path 63 to a data receiving data system 210. Data then may be exchanged between data originating and receiving systems 120, 210 on the established network communication path between array nodes 12 and 21 over the interconnected primary transmission path 1222 and secondary transmission path 212.

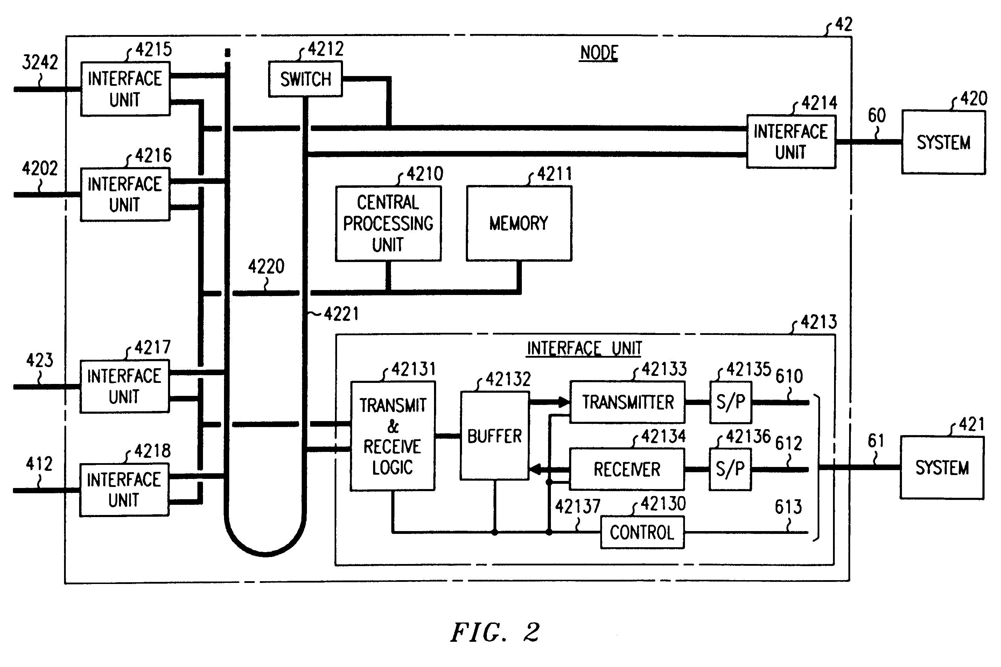

Each array node, although capable of serving different types and quantities of data systems, is identical to each other array node and only one array node 42, FIG. 2, need be described. Node 42 may be a type of network commonly referred to as a local area network and may, although not limited thereto, be an AT&T Datakit™ local area network. Such networks need not be described in detail for an understanding of the invention and in general have a central processing unit 4210 and a memory unit 4211 each interconnected in a well-known manner by address, data and control leads to a bus 4220. Bus 4220 functions to interconnect central processing unit 4210 and memory unit 4211 with interface units 4213 through 4218, each connected respectively with communication paths 61, 60 coupled with data systems 421, 420, primary transmission paths 3242, 4202, and secondary transmission paths 423, 412.

Interface units may be connected to incoming primary and secondary transmission paths and various types of data systems. A typical interface unit 4213 is connected to bus 4220 and serves to interface bus 4220 with primary and secondary transmission paths and with data system communication paths, such as communication path 61 coupled with data system 421. Communication path 61 may comprise a data transmit path 610, a data receive path 612, and control leads 613 extending between interface unit 4213 and data system 421. Transmit and receive data paths 610 and 612 may comprise serial to parallel converter apparatus 42135, 42136 and transmitter and receiver logic 42133, 42134 coupled with buffer 42132 which in turn is coupled with transmit and receive logic 42131 connected with bus 4220 and node switch path 4221. Control leads 613 are coupled with interface control 42130 which is connected by interface bus 42137 with transmit and receive logic 42131, buffer 42132, transmitter and receiver logic 42133, 42134.

Each node may have a switch path 4221 connected to transmit and receive logic 42131 of interface units 4213 through 4218 and supervised by switch 4212 under control of central processor unit 4210.

Switch path 4221 has a plurality of data paths coupled with ones of the interface units 4213 through 4218 such that switch 4212 is enabled under control of central processor unit 4210 to selectively connect ones of the data paths together so as to establish data transmission paths within node 42 between ones of the interface units.

Data system 421 originates a request for a network connection by placing a connection request on control leads 613. Interface control 42130 responds to the request by enabling transmit and receive logic 42131 to notify central processor unit 4210, via bus 4220, that data system 421 has requested that a connection be established with a destination data system identified by originating data system 421. Central processor unit 4210 responds to the call connection request by enabling switch 4212 to selectively establish a data connection, via switch path 4221, between interface unit 4213 and other interface units coupled with data system 420, or with primary and secondary transmission paths 3242, 4202 and 412, 423.

Once a network connection has been established with the destination data system, data generated by originating data system 421 is transmitted over communication path 61 to interface unit 4213. The received data may be converted by serial/parallel converter 42136, if required, and transmitted via receiver logic 43134, under supervision of control 42130 to buffer 42132. The buffered data is read into transmit and receive logic 42131 which is supervised by control 42130, via bus 42137, to transmit the received data over a switch path 4221 to the appropriate interface unit and primary, second transmission or communication path 3242, 4202, 412, 423 or 60 to the destination data system. Incoming data directed to a destination data system, such as data system 421, is received by an interface unit 4214 through 4218 and transmitted by a switch path 4221 to interface unit 4213. The incoming data is received by transmit and receive logic 42131 and loaded into buffer 42132 under supervision of control 42130 and transmitted by transmitter logic 42133 and by serial/parallel converter 43215 over communication path 61 to destination data system 421.

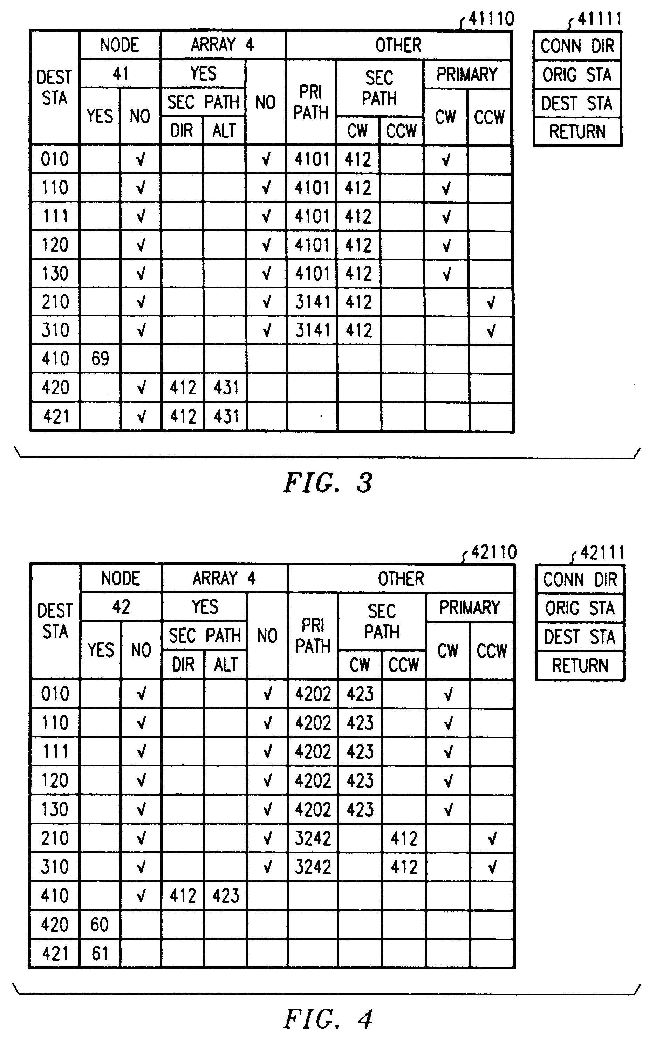

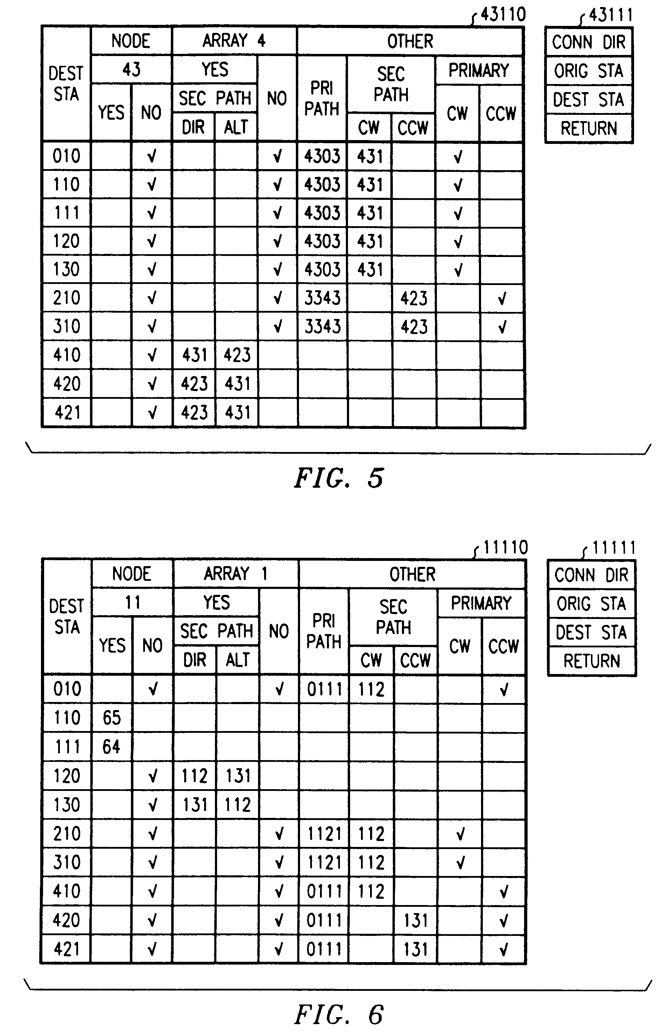

Central processing unit 4210 may be any one of a number of stored programmed processors wherein a program directs central processing unit 4210 in controlling the operation of each array node. Memory unit 4211 may be used to store subroutines, such as subroutines 42110, 42111, FIG. 4, used in controlling central processing unit 4210, FIG. 2, to interconnect primary, secondary transmission, and communication paths in a precedence order to establish a network communication path between originating and destination data systems served by network 6. Similarly, memory units of each array node store similar type of subroutines for controlling operation of the array node. For example, array node 11, FIG. 1, may have a memory unit 1111 storing subroutines 11110, 11111, FIG. 6, which control the operation of array node 11 in establishing network communication paths.

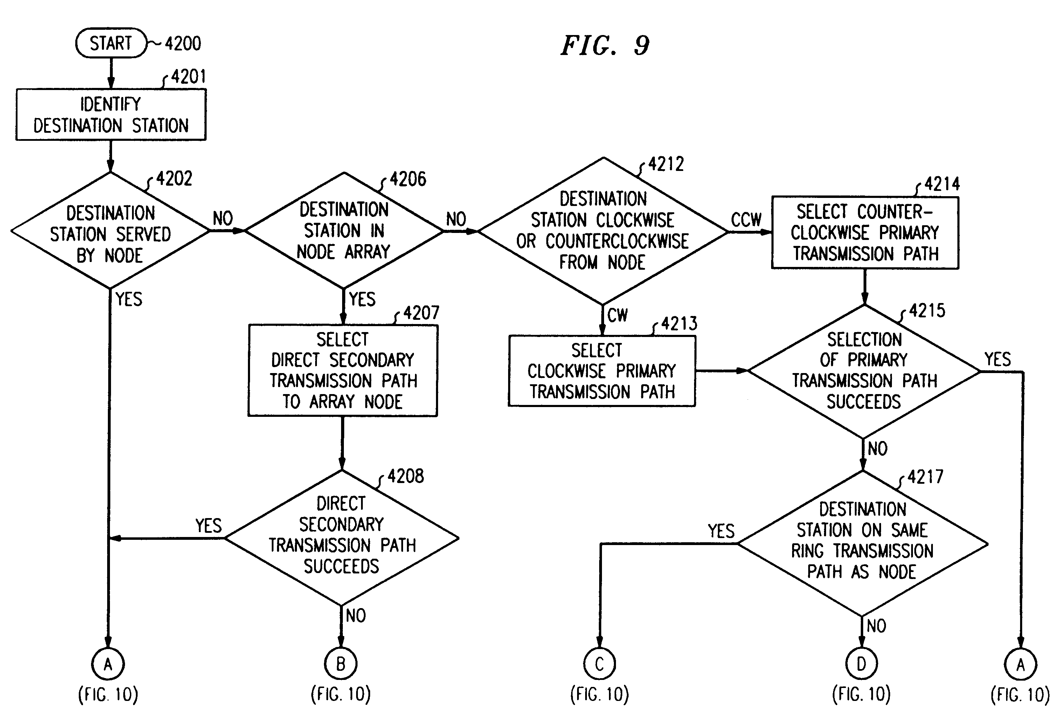

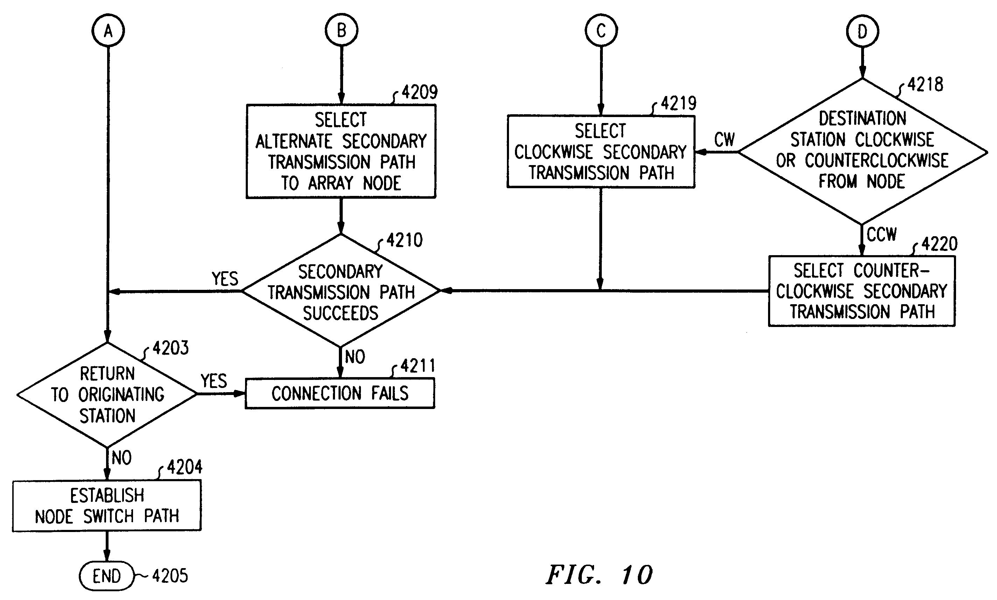

Originating data system 421, FIG. 2, initiates a network connection request by placing a request signal on leads 613 of communication path 61. Interface unit control 42130 responds by notifying central processing unit 4210, via transmit and receive logic 42131 and bus 4220, of the network connection request. Central processing unit 4210 responds to the connection request by notifying originating data system 421 to identify the destination data system. Upon identifying the destination data system, step 4201, FIG. 9, central processing unit 4210 determines if the identified destination data system is served by array node 42, step 4202. When the destination data system is identified as data system 420, FIG. 2, central processing unit 4210 determines that destination data system 420, step 4202, FIG. 9, is served by array node 42. Subroutine 42110, FIG. 4, indicates that a path connection is to be established with destination data system 420 via communication path 60. If the network connection is not being returned to array node 42 from another array node, step 4203, FIG. 10, central processing unit 4210, step 4204, is enabled to control array node switch 4212, FIG. 2, to establish a path connection by interconnecting communication paths 61, 60 through interface units 4213, 4214, and a switch path 4221 to couple originating data system 421 with destination data system 420. Central processing unit 4210, step 4205, FIG. 10, then releases from the connection.

Central processing unit 4210, FIG. 2, responds to a connection request appearing on an incoming primary transmission path 3242, 4202, or secondary transmission path 412, 423, by identifying the destination data system, step 4201, FIG. 9. When the destination data system, step 4202, is identified as served by array node 42, such as destination data systems 420 or 421, central processing unit 4210 under control of subroutine 42110, FIG. 4, determines that the identified destination data system, for example, destination data system 420, is coupled by communication path 60 with array node 42. Unless the network connection is being returned to array node 42, step 4203, FIG. 10, switch 4212, FIG. 2, is controlled to selectively establish an array node data path between the interface units 4215 through 4218 coupled with the incoming primary or secondary transmission path and interface unit 4214 coupled via communication path 60 with destination data system 420, step 4204, FIG. 10. Central processing unit 4210, step 4205, then releases from the connection.

If, in response to a network connection request generated by originating data system 421 served by array node 42, the destination data system is identified as destination data system 410, step 4201, central processing unit 4210 of array node 42, step 4202, determines that destination data system 410 is located in node array 4, step 4206. Central processing unit 4210 determines from subroutine 42110, FIG. 4, that a network connection may be established to destination data system 410 by direct secondary transmission path 412 or by alternative secondary transmission path 423, FIG. 1.

Upon determining that destination data system 410 is located in array node 4, step 4206, FIG. 9, central processing unit 4210 selects direct secondary path 412 in accordance with subroutine 42110, FIG. 4, and determines if the direct secondary path 412 will succeed, steps 4207, 4208. If selected direct secondary transmission path 412 will succeed, FIG. 9, central processing unit 4210 determines if the connection path is returned to array node 42, step 4203, FIG. 10, subroutine 42111, FIG. 4, and if the network connection is returned, indicates that the connection attempt has failed, step 4211, FIG. 10. When it is determined that the attempted network connection has not returned, step 4203, central processing unit 4210, FIG. 2, controls switch 4212 to interconnect originating data system 421 via communication path 61, switch path 4221, and interface units 4213, 4218 with direct secondary transmission path 412, FIG. 1, interconnecting array node 42 with array node 41.

When direct secondary transmission path 412 does not succeed, step 4208, FIG. 9, and is unavailable, central processing unit 4210, step 4209, FIG. 10, selects the alternative secondary transmission path 423, subroutine 42110, FIG. 4. If the selected alternative secondary transmission path 423 does not succeed, step 4210, FIG. 10, the connection attempt fails, step 4211. When selected alternative secondary transmission path 423 is available and the network connection has not returned to array node 42, steps 4210, 4203, central processing unit 4210 establishes the node switch path, step 4204. Array node 42 switch path is established by central processing unit 4210, FIG. 2, controlling switch 4212 to interconnect originating data system 421 communication path 61 with alternative secondary transmission path 423 via interface units 4213, 4217 and switch path 4221.

A network connection request appearing on a primary or a secondary transmission path incoming to an array node, for example, primary transmission paths 3141, 4101, FIG. 1, and secondary transmission paths 412, 431, may identify that a connection is to be established with destination data system 410 served by array node 41. Central processing unit 4110, identical to central processing unit 4210 of array node 42, FIG. 2, identifies destination data system 410, steps 4201, 4202, and determines that destination data system 410, subroutine 41110, FIG. 3, is served by array node 41 and coupled therewith by communication path 69. If the network connection path is not being returned to array node 41, step 4203, central processing unit 4110 controls switch 4112 to selectively interconnect the appropriate incoming primary transmission paths 3141, 4101, FIG. 1, or direct and secondary transmission paths 412, 431 via a switch path and the appropriate interface units with communication path 69 coupling array node 41 to destination data system 410.

An originating data system 421 may initiate a network connection request to establish a network path to destination data system 111 served by array node 11 located in node array 1. Central processing unit 4210, FIG. 2, responds to originating data system 421 by identifying destination data system 111, step 4201, FIG. 9, and determining that destination data system 111 is not served by array node 42 nor located in node array 4, steps 4202, 4206. It is further determined, subroutine 42110, FIG. 4, that destination data system 111 is served by another node array and that the network connection is to be established to destination data system 111 served by a distant node in another node array located in a clockwise direction on network 6 from node array 4, step 4212, FIG. 9.

Central processing unit 4210, FIG. 2, is enabled upon ascertaining the direction of distant node array 1 to select primary transmission path 4202, step 4213, FIG. 4. If the attempted network connection via primary transmission path 4202 succeeds, step 4215, FIG. 9, and the network connection is not returned to array node 42, switch 4212, FIG. 2, is controlled to interconnect originating data system 421, communication path 61, subroutine 42110, FIG. 4, to primary transmission path 4202 extending to an adjacent node array 0 positioned on network 6 in the direction of distant node array 1, step 4204, FIG. 10.

Central processing unit 4210 is enabled upon the unavailability of primary transmission path 4202, steps 4215, 4217, for deciding if distant array node 11 serving destination data system 111, FIG. 1, is on the same ring transmission path as array node 42. Upon determining that distant array node 11 is located on a different ring transmission path and is located clockwise from array node 42, step 4218, FIG. 10, central processing unit 4210, in accordance with subroutine 42110, FIG. 4, selects secondary transmission path 423, step 4219, FIG. 10, extending from array node 42, FIG. 1,
to adjacent array node 43. If selected secondary transmission path 423 succeeds, step 4210, FIG. 10, central processing unit 4210, after determining that the network path is not being returned, step 4203, controls switch 4212, FIG. 2, to interconnect communication path 61 with selected secondary transmission path 423 extending to adjacent array node 43, FIG. 1.

Array node 43 central processing unit responds to a network connection request appearing on incoming secondary transmission path 423 by identifying destination data system 111, step 4201, FIG. 9, and determining that destination data system 111 is not served by array node 43 nor located in node array 4, steps 4202, 4206. A determination is made, step 4212, that destination data system 111, subroutine 43110, FIG. 5, is located clockwise on network 6 from array node 43 and that primary transmission path 4303, FIG. 1, is to be selected to establish a transmission path to adjacent array node 03, step 4213, FIG. 9. If selected primary path 4303 succeeds, and the network connection path request is not returned to array node 43, steps 4215, 4203, FIG. 10, node switch path, step 4204, is established through array node 43, FIG. 1, by interconnecting secondary transmission path 423 with primary transmission path 4303.

Central processing unit of array node 03 responds to the network connection request appearing on incoming primary transmission path 4303 by identifying destination data system 111, step 4201, FIG. 9, and determining that destination data system 111 is not served by array node 03 nor located in node array 0, steps 4202, 4206. A determination is made, step 4212, that destination data system 111 is located clockwise on network 6, step 4213, FIG. 9, from array node 03 and that primary transmission path 0313, FIG. 1, is to be selected to establish a transmission path to adjacent array node 13, step 4215, FIG. 9. If selected primary path 0313 succeeds, and the network connection path request is not returned to array node 03, step 4203, FIG. 10, a node switch path, step 4204, is established through army node 03, FIG. 1, by interconnecting primary transmission path 4303 with primary transmission path 0313.

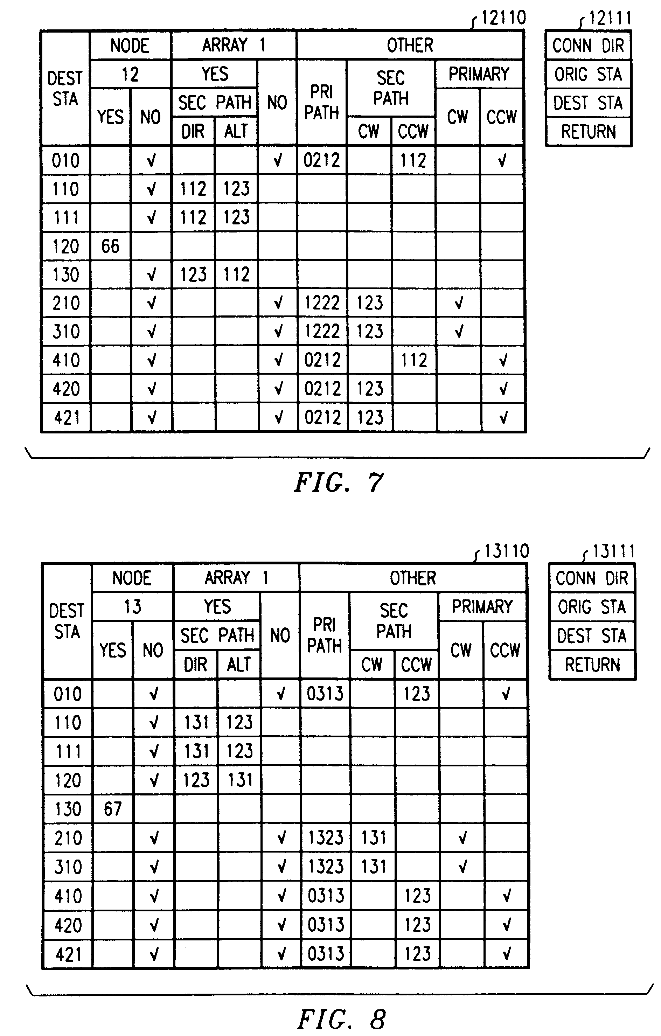

Array node 13 central processing unit responds to the network connection request appearing on incoming primary transmission path 0313 by identifying destination data system 111, step 4201, FIG. 9, and determining that destination data system 111 is served by army node 11 located in node array 1, step 4206. Central processing unit 1310 of array node 13, operating in accordance with subroutine 13110, FIG. 8, selects direct secondary transmission path 131, step 4207, FIG. 9. If selected direct secondary path 131 succeeds and the network connection path is not being returned to array node 13, steps 4203, 4204, FIG. 10, a node switch path, step 4204, is established through array node 13, FIG. 1, by interconnecting primary transmission path 0313 with selected direct secondary transmission path 131.

When the network connection request appears on direct secondary transmission path 131 incoming to array node 11, the central processing unit of array node 11 identifies destination data system 111 and determines that destination data system 111 is served by array node 11, steps 4201, 4202, FIG. 9. Array node 11 central processing unit, operating in accordance with subroutine 11110, FIG. 6, establishes a node path between incoming direct secondary transmission path 131 and communication path 64 coupling array node 11 with destination data system 111. A network connection path, FIG. 1, has been established between originating data system 421 and destination data system 111 via communication path 61, array node 42, direct secondary transmission path 423, array node 43, primary transmission path 4303, array node 03, primary transmission path 0313, array node 13, direct secondary transmission path 131, array node 11, and communication path 64.

Assuming that originating data system 421 initiated a network connection request to destination data system 120 and that selected primary transmission path 4202, step 4215, FIG. 9, does not succeed, central processing unit 4210, step 4217, determines that destination data system 120 is positioned on the same ring transmission path as array node 42. Central processing unit 4210, operating under control of subroutine 42110, FIG. 4, determines that destination data system 120 is positioned on network 6 clockwise from array node 42 and that secondary transmission path 423 should be selected when primary transmission path 4202 does not succeed, step 4219, FIG. 10. Central processing unit 4210, FIG. 2, controls switch 4212 to selectively interconnect originating data system 421 communication path 61 with secondary transmission path 423 in accordance with the most direct distance that array node 12 is on network 6 from array node 42. If selected primary transmission path 4202, step 4215, FIG. 9, and secondary transmission path 423, step 4210, FIG. 10, are unavailable or do not succeed, central processing unit 4210 indicates a failure of the originating data system 421 network connection request, step 4211. Assuming that selected primary and secondary transmission paths succeed, a network path connection is established between originating and destination data systems 421, 120, FIG. 1, over communication path 61, array node 42, secondary transmission path 423, array node 43, primary transmission path 4303, array node 03, primary transmission path 0313, array node 13, secondary transmission path 123, array node 12, and communication path 66.

Each array node central processing unit determines when a network connection path initiated in response to a network connection request originated by an originating data system served by the array node has been returned to the array node. When originating data system 421, FIG. 1, requests a network connection path to destination data system 111, central processing unit 4210, operating in accordance with subroutine 42111, FIG. 4, records the identities of both the originating and destination data systems 421 and 111, respectively. In the highly remote possibility that primary transmission paths 4202, 4303 or 4101, FIG. 1, would be unavailable or would not succeed at array nodes 42, 43 and 41, respectively, the network connection request would return to originating array node 42 on incomming secondary transmission path 412. Central processing unit 4210 would record this event as a returned network connection request in subroutine 42111, FIG. 4, and would identify this request as a connection failure, steps 4203, 4211, FIG. 10.

## Claims

1. A data communication network (6) for selectively interconnecting data systems (010, 110, 111, 120, 130, 210, 310, 410, 420, 421) coupled with nodes of the network to enable exchange of data between data originating and destination data systems coupled with ones of the data communication network nodes
   CHARACTERIZED IN THAT
   said data communication network comprises
   a plurality of node arrays (0, 1, 2, 3, 4) each having a predetermined number of nodes interconnected by secondary transmission paths (012, 023, 031, 112, 123, 131, 212, 223, 231, 312, 323, 331, 412, 423, 431) for exchanging data with other nodes of the array and wherein each array node is interconnected by primary transmission paths (0111, 0212, 0313, 1121, 1222, 1323, 2131, 2232, 2333, 3141, 3242, 3343, 4101, 4202, 4303) with a corresponding array node of each adjacent node array for establishing ring transmission paths between node arrays with each ring transmission path interconnecting corresponding array nodes, and
   means (01, 02, 03, 11, 12, 13, 21, 22, 23, 31, 32, 33, 41, 42, 43) for selectively interconnecting ones of the primary transmission paths and ones of the primary transmission paths with ones of the secondary transmission paths in a precedence order to establish a network communication path between one array node interconnected with a data originating data system and another array node interconnected with a destination data system thereby enabling exchange of data between said originating and destination data systems on said established network communication path.

2. The data communication network set forth in claim 1
   CHARACTERIZED IN THAT
   each array node comprises
   means (4210, 4211, 4212, 4213, 4214, 4215, 4216, 4217, 4218 for interfacing primay and secondary transmission paths and data systems with said array node and for selectively interconnecting said interfacing means and which means are responsive to path connection requests for controlling the establishment of node switched data transmission paths between said primary and secondary transmission paths and said data systems in accordance with said precedence order.

3. The data communication network set forth in claim 2
   CHARACTERIZED IN THAT
   said array node interfacing and controlling means comprises
   means (4210, 4211, 42110) responsive to a network connection request of an originating data system served by said array node for determining if said connection is to be established to a destination data system served by said array node, and
   means (4212, 4213, 4214) enabled upon determining that said originating and destination data systems are served by said array node for selectively interconnecting said interfacing means to establish communication paths coupling said originating and destination data systems.

4. The data communication network set forth in claim 2
   CHARACTERIZED IN THAT
   said array node interfacing and controlling means comprises
   means (4210, 4211, 42110) responsive to a network connection request of an originating data system served by said array node for determining if said connection is to be established to a destination data system served by a second node located in said node array, and
   means (4212, 4213, 4214, 4217, 4218) enabled upon determining that said destination data system is served by said second array node for selectively interconnecting said interfacing means to establish a communication path coupling said array node to said originating data system to a direct secondary transmission path interconnecting said array node with said second node array.

5. The data communication network set forth in claim 4
   CHARACTERIZED IN THAT
   said array node controlling means comprises
   means (4210, 4211, 42110, 4212, 4213, 4214, 4217, 4218) enabled upon the unavailability of said direct secondary transmission path for selectively interconnecting said originating data system communication path to an alternative secondary transmission path interconnecting said array node with a third array node.

6. The data communication network set forth in claim 5

CHARACTERIZED IN THAT

said array node controlling means comprises

means (4210, 4211, 42110, 4212, 4213, 4214, 4215, 4216, 4217, 4218) enabled upon determining that a network connection request incoming on a direct or alternative secondary transmission path is for a destination data system served by said array node for selectively interconnecting said incoming direct and alternative secondary transmission path to a communication path coupling said array node to said destination data system.

7. The data communication network set forth in claim 2

CHARACTERIZED IN THAT

said array node controlling means comprises

means (4210, 4211, 42111) responsive to a network connection request of an originating data system served by said array node for determining if said network connection is to be established to a destination data system served by a node in another node array located in the data communication network and upon determining that said destination data system is served by said other node array for ascertaining direction that said other node array is positioned on the data communication network from said array node, and

means (4212, 4213, 4214, 4215, 4216) enabled upon ascertaining direction of said other array node for selectively interconnecting said interface means to establish a communication path coupling said array node to said originating data system to a primary transmission path extending to an adjacent node array positioned on the data communication network in the direction of said other node array.

8. The data communication network set forth in claim 7

CHARACTERIZED IN THAT

said array node controlling means comprises

means (4210, 4211, 42111 ) enabled upon the unavailability of said primary transmission path for deciding if said other array node is on a ring transmission path interconnected with said array node, and

means (4212, 4213, 4214, 4217, 4218) enabled upon determining that said other array node is on said ring transmission path for selectively interconnecting said originating data system communication path with a first predetermined secondary transmission path extending to an adjacent array node.

9. The data communication network set forth in claim 8

CHARACTERIZED IN THAT

said array node controlling means comprises

means (4210, 4211, 42111, 4212, 4213, 4214, 4217, 4218) enabled upon determining that said other array node is positioned on another ring transmission path for selectively interconnecting said originating data system communication path with said first predetermined or a second secondary transmission path in accordance with the distance said other node array is on said ring transmission path from said array node.

10. A method of controlling a data communication network (6) comprised of node arrays (0, 1, 2, 3, 4) with each node array having a predetermined number of nodes (01, 02, 03, 11, 12, 13, 21, 22, 23, 31, 32, 33, 41, 42, 43) coupled with data systems (010, 110, 111, 120, 130, 210, 310, 410, 420, 421) served by the network

CHARACTERIZED IN THAT

said method comprises the step (FIGS. 9 and 10) of

responding to a path connection request appearing on secondary transmission paths interconnecting ones of the array nodes and primary transmission paths each interconnecting an array node with a corresponding array node of an adjacent node array and generated by an originating one of the data systems for controlling the network array nodes to selectively interconnect ones of the primary and secondary transmission paths and ones of the data systems and establish a network communication path in a precedence order defined by each network array node between one array node interconnected with a data originating data system and another array node interconnected with a destination data system thereby enabling exchange of data between said originating and destination data systems on said established network communication path.

FIG. 1

*FIG. 2*

EP 0 482 813 A1

~41110  ~41111

| DEST STA | NODE 41 | | ARRAY 4 YES | | ARRAY 4 | OTHER | | | | |
|---|---|---|---|---|---|---|---|---|---|---|
| | | | SEC PATH | | | PRI PATH | SEC PATH | | PRIMARY | |
| | YES | NO | DIR | ALT | NO | | CW | CCW | CW | CCW |
| 010 | | √ | | | √ | 4101 | 412 | | √ | |
| 110 | | √ | | | √ | 4101 | 412 | | √ | |
| 111 | | √ | | | √ | 4101 | 412 | | √ | |
| 120 | | √ | | | √ | 4101 | 412 | | √ | |
| 130 | | √ | | | √ | 4101 | 412 | | √ | |
| 210 | | √ | | | √ | 3141 | 412 | | | √ |
| 310 | | √ | | | √ | 3141 | 412 | | | √ |
| 410 | 69 | | | | | | | | | |
| 420 | | √ | 412 | 431 | | | | | | |
| 421 | | √ | 412 | 431 | | | | | | |

| CONN DIR |
|---|
| ORIG STA |
| DEST STA |
| RETURN |

*FIG. 3*

~42110  ~42111

| DEST STA | NODE 42 | | ARRAY 4 YES | | ARRAY 4 | OTHER | | | | |
|---|---|---|---|---|---|---|---|---|---|---|
| | | | SEC PATH | | | PRI PATH | SEC PATH | | PRIMARY | |
| | YES | NO | DIR | ALT | NO | | CW | CCW | CW | CCW |
| 010 | | √ | | | √ | 4202 | 423 | | √ | |
| 110 | | √ | | | √ | 4202 | 423 | | √ | |
| 111 | | √ | | | √ | 4202 | 423 | | √ | |
| 120 | | √ | | | √ | 4202 | 423 | | √ | |
| 130 | | √ | | | √ | 4202 | 423 | | √ | |
| 210 | | √ | | | √ | 3242 | | 412 | | √ |
| 310 | | √ | | | √ | 3242 | | 412 | | √ |
| 410 | | √ | 412 | 423 | | | | | | |
| 420 | 60 | | | | | | | | | |
| 421 | 61 | | | | | | | | | |

| CONN DIR |
|---|
| ORIG STA |
| DEST STA |
| RETURN |

*FIG. 4*

## FIG. 5

Table 43110:

| DEST STA | NODE 43 | | ARRAY 4 YES | | | OTHER | | | | |
| --- | --- | --- | --- | --- | --- | --- | --- | --- | --- | --- |
| | YES | NO | SEC PATH DIR | ALT | NO | PRI PATH | SEC PATH CW | SEC PATH CCW | PRIMARY CW | PRIMARY CCW |
| 010 | | √ | | | √ | 4303 | 431 | | √ | |
| 110 | | √ | | | √ | 4303 | 431 | | √ | |
| 111 | | √ | | | √ | 4303 | 431 | | √ | |
| 120 | | √ | | | √ | 4303 | 431 | | √ | |
| 130 | | √ | | | √ | 4303 | 431 | | √ | |
| 210 | | √ | | | √ | 3343 | | 423 | | √ |
| 310 | | √ | | | √ | 3343 | | 423 | | √ |
| 410 | | √ | 431 | 423 | | | | | | |
| 420 | | √ | 423 | 431 | | | | | | |
| 421 | | √ | 423 | 431 | | | | | | |

Table 43111:

| CONN DIR |
| --- |
| ORIG STA |
| DEST STA |
| RETURN |

## FIG. 6

Table 11110:

| DEST STA | NODE 11 | | ARRAY 1 YES | | | OTHER | | | | |
| --- | --- | --- | --- | --- | --- | --- | --- | --- | --- | --- |
| | YES | NO | SEC PATH DIR | ALT | NO | PRI PATH | SEC PATH CW | SEC PATH CCW | PRIMARY CW | PRIMARY CCW |
| 010 | | √ | | | √ | 0111 | 112 | | | √ |
| 110 | 65 | | | | | | | | | |
| 111 | 64 | | | | | | | | | |
| 120 | | √ | 112 | 131 | | | | | | |
| 130 | | √ | 131 | 112 | | | | | | |
| 210 | | √ | | | √ | 1121 | 112 | | √ | |
| 310 | | √ | | | √ | 1121 | 112 | | √ | |
| 410 | | √ | | | √ | 0111 | 112 | | | √ |
| 420 | | √ | | | √ | 0111 | | 131 | | √ |
| 421 | | √ | | | √ | 0111 | | 131 | | √ |

Table 11111:

| CONN DIR |
| --- |
| ORIG STA |
| DEST STA |
| RETURN |

12110

| DEST STA | NODE 12 | | ARRAY 1 — YES | | NO | OTHER | | | | |
|---|---|---|---|---|---|---|---|---|---|---|
| | YES | NO | SEC PATH DIR | SEC PATH ALT | | PRI PATH | SEC PATH CW | SEC PATH CCW | PRIMARY CW | PRIMARY CCW |
| 010 | | √ | | | √ | 0212 | | 112 | | √ |
| 110 | | √ | 112 | 123 | | | | | | |
| 111 | | √ | 112 | 123 | | | | | | |
| 120 | 66 | | | | | | | | | |
| 130 | | √ | 123 | 112 | | | | | | |
| 210 | | √ | | | √ | 1222 | 123 | | √ | |
| 310 | | √ | | | √ | 1222 | 123 | | √ | |
| 410 | | √ | | | √ | 0212 | | 112 | | √ |
| 420 | | √ | | | √ | 0212 | 123 | | | √ |
| 421 | | √ | | | √ | 0212 | 123 | | | √ |

12111

| |
|---|
| CONN DIR |
| ORIG STA |
| DEST STA |
| RETURN |

**FIG. 7**

13110

| DEST STA | NODE 13 | | ARRAY 1 — YES | | NO | OTHER | | | | |
|---|---|---|---|---|---|---|---|---|---|---|
| | YES | NO | SEC PATH DIR | SEC PATH ALT | | PRI PATH | SEC PATH CW | SEC PATH CCW | PRIMARY CW | PRIMARY CCW |
| 010 | | √ | | | √ | 0313 | | 123 | | √ |
| 110 | | √ | 131 | 123 | | | | | | |
| 111 | | √ | 131 | 123 | | | | | | |
| 120 | | √ | 123 | 131 | | | | | | |
| 130 | 67 | | | | | | | | | |
| 210 | | √ | | | √ | 1323 | 131 | | √ | |
| 310 | | √ | | | √ | 1323 | 131 | | √ | |
| 410 | | √ | | | √ | 0313 | | 123 | | √ |
| 420 | | √ | | | √ | 0313 | | 123 | | √ |
| 421 | | √ | | | √ | 0313 | | 123 | | √ |

13111

| |
|---|
| CONN DIR |
| ORIG STA |
| DEST STA |
| RETURN |

**FIG. 8**

FIG. 9

START ~4200

IDENTIFY DESTINATION STATION — 4201

DESTINATION STATION SERVED BY NODE — 4202

DESTINATION STATION IN NODE ARRAY — 4206

DESTINATION STATION CLOCKWISE OR COUNTERCLOCKWISE FROM NODE — 4212

SELECT COUNTER-CLOCKWISE PRIMARY TRANSMISSION PATH — 4214

SELECT DIRECT SECONDARY TRANSMISSION PATH TO ARRAY NODE — 4207

SELECT CLOCKWISE PRIMARY TRANSMISSION PATH — 4213

SELECTION OF PRIMARY TRANSMISSION PATH SUCCEEDS — 4215

DIRECT SECONDARY TRANSMISSION PATH SUCCEEDS — 4208

DESTINATION STATION ON SAME RING TRANSMISSION PATH AS NODE — 4217

A (FIG. 10)
B (FIG. 10)
C (FIG. 10)
D (FIG. 10)
A (FIG. 10)

EP 0 482 813 A1

FIG. 10

**European Patent Office**

## EUROPEAN SEARCH REPORT

Application Number

EP    91 30 9471

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 797 882 (AT&T) | 1-3,10 | H04L12/42 |
| Y | * column 3, line 30 - line 39 * | 4-9 | G06F15/16 |
| | * column 7, line 32 - line 36 * | | |
| | * column 8, line 20 - line 31 * | | |
| | --- | | |
| X | EP-A-0 206 512 (TEXAS INSTRUMENTS INC.) | 1-3,10 | |
| | * column 4, line 51 - column 5, line 12 * | | |
| | * column 7, line 21 - line 40 * | | |
| | * column 14, line 46 - column 15, line 15 * | | |
| | --- | | |
| Y | IEEE TRANSACTIONS ON COMPUTERS. vol. 38, no. 8, August 1989, NEW YORK US pages 1059 - 1074; W. T. TSAI ET AL.: 'An Adaptive Hierarchical Routing Protocol' * page 1060, left column, line 13 - line 24 * * page 1061, right column, line 42 - page 1062, left column, line 17 * * page 1062, right column, line 26 - line 43 * | 4-9 | |
| | ----- | | **TECHNICAL FIELDS SEARCHED (Int. Cl.5)** |
| | | | H04L G06F |

The present search report has been drawn up for all claims

| Place of search | Date of completion of the search | Examiner |
|---|---|---|
| THE HAGUE | 20 JANUARY 1992 | MESSELKEN M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)